# EUROPEAN PATENT APPLICATION

(11) **EP 2 381 696 A2**
(43) Date of publication of application: **26.10.2011**
(21) Application number: 09835194.3
(22) Date of filing: 07.12.2009
(51) Int. Cl.: H04Q 9/02, H04W 4/24

(54) **METHOD OF SETTING A TRANSMISSION CYCLE FOR INFORMATION ON CONSTRUCTION EQUIPMENT**

(30) Priority: 24.12.2008 KR 20080133002
(71) Applicant: Doosan Infracore Co., Ltd., Dong-gu Incheon 401-020 (KR)
(72) Inventor: KIM, Jae Hoon, Yongin-si Gyeonggi-do 448-556 (KR)
(74) Representative: Barth, Stephan Manuel
(86) International application number: PCT/KR2009/007257
(87) International publication number: WO 2010/074428

(57) **Abstract**

The present invention relates to a method for setting a remote transmission cycle of information of a construction machinery for enabling a user or a provider to directly set the transmission cycle of the information of the construction machinery. To this end, the present invention enables the user or provider to set the transmission cycle for each information data packet. Further, the present invention previously determines various modes (e.g., a minimum charge mode, a medium charge mode, and a maximum charge mode) in which cycles of information data packets are set for each charge and enables the user or provider to set the transmission cycle by selecting the mode. Therefore, the user or provider can directly set the cycle for each packet or select the charge mode in accordance with a content of desired information and a desired communication cost condition.

## Description

### Technical Field

The present invention relates to a remote management system of a construction machinery, and more particularly, to a method for setting a transmission cycle of information of a construction machinery for enabling a user or a provider to directly set the transmission cycle of the information of the construction machinery transmitted from a communication terminal connected with the construction machinery to a control server.

### Background Art

In general, in a remote management system of a construction machinery, a communication terminal connected with a vehicle control device of a construction machinery such as an excavator, a wheel loader, or the like transmits to a control server by using a mobile communication network or a satellite communication network information including engine rpm (radius per minute), battery voltage, the temperature of cooling water, the temperature of oil, on/off sensing information of various switches, on/off sensing information of solenoids or relays, error information (error code), an operation time for each operation mode, an engine operation time, a filter/oil using time, the pressures of a pump and a cylinder, fuel information, load rate information, positional information, and the like of the machinery.

The communication terminal transmits the information of the construction machinery to the control server at a predetermined transmission cycle and in general, a provider that provides the remote management system previously estimates a monthly communication cost of a level suitable for a customer and determines optimal values of a monthly transmission data amount or the number of monthly transmission times for each communication type according to the estimated monthly communication cost. Further, the transmission cycle in the communication terminal is determined for each data packet without departing from the optimal values and this is set as a default. For example, a default value is set so that a data packet containing monitoring information, packet A, is transmitted once a day and a data packet containing positional information, packet B, is transmitted four times a day.

As described above, at present, the provider previously estimates the monthly communication cost of the level suitable for the customer and information data is transmitted only at the transmission cycle set as the default to suit the optimal values of the monthly transmission data amount or the number of monthly transmission times for each communication type according to the estimated monthly communication cost.

As a result, even though a customer who estimates a cost lower than the communication cost estimated by the provider wants to further increase the transmission cycle, the customer cannot additionally adjust the set transmission cycle at present.

Further, even though the customer wants to change a cycle value for necessary information among information as necessary, the customer cannot additionally adjust the cycle value, and as a result, the customer cannot change a predetermined cycle value.

### Detailed Description

### Technical Problem

An object of the present invention is to provide a method for setting a transmission cycle of information of a construction machinery for enabling a user or a provider to directly set the transmission cycle of the information of the construction machinery.

### Technical Solution

In order to achieve the object, a method for setting a remote transmission cycle of information of a construction machinery using a control server in the construction machinery including a communication terminal according to the present invention includes: receiving, by the communication terminal, a cycle value for each set cycle value for each packet from the control server, and changing and setting a current cycle value for each information data packet to the cycle value for each packet transmitted from the control server when a request for setting the information transmission cycle of the construction machinery is received from the control server to the communication terminal; and transmitting the information data packets of the construction machinery to the control server in accordance with the changed transmission cycle value.

Further, according to the exemplary embodiment of the present invention, the method may further include transmitting, by a user terminal, the selected packet information to the control server when a user of the construction machinery selects each packet for setting the transmission cycle of the information of the construction machinery through the user terminal.

In addition, according to the exemplary embodiment of the present invention, the method may further include: providing, by the control server, selectable charge modes when selection for each packet for setting the transmission cycle of the information of the construction machinery from the construction machinery user is classified into communication charge modes transmitted from the communication terminal to the control server and there is selection for setting each communication charge mode, and transmitting a predetermined cycle value for each packet corresponding to the selected charge mode when one charge mode of charge modes; and changing and setting, by the communication terminal, the current cycle value for each information data packet to the cycle value for each packet transmitted from the control server and transmitting the information data packets of the construction machinery to the control server in accordance with the changed transmission cycle value.

Moreover, according to the exemplary embodiment of the present invention, the method may further include: providing, by the control server, selectable charge modes when selection for each packet for setting the transmission cycle of the information of the construction machinery from the construction machinery user is classified into the communication charge modes transmitted from the communication terminal to the control server and there is selection for setting each communication charge mode and transmitting the information on the selected charge mode to the communication terminal when one charge mode of charge modes; and changing and setting, by the communication terminal, the current cycle value for each information data packet to the predetermined cycle value for each packet in accordance with the charge mode transmitted from the control server and transmitting the information data packets of the construction machinery to the control server in accordance with the changed transmission cycle value.

Besides, a method for setting a remote transmission cycle of information of a construction machinery using a control server in the construction machinery including a communication terminal according to the present invention may include changing and setting, by the communication terminal, current information data to a predetermined cycle value for each packet when there is selection of a cycle value for each packet for setting the transmission cycle of the information of the construction machinery through the communication terminal from a user of the construction machinery or a predetermined input device attached to the construction machinery; and transmitting information data packets of the construction machinery to the control server in accordance with the changed transmission cycle value.

Further, according to the exemplary embodiment of the present invention, the method may further include transmitting, by the communication terminal, the selected packet information to the control server when the user of the construction machinery selects the cycle value for each packet for setting the transmission cycle of the information of the construction machinery.

Moreover, according to the exemplary embodiment of the present invention, the method may further include providing, by the communication terminal or the predetermined input device attached to the construction machinery, selectable charge modes when selection for each packet for setting the transmission cycle of the information of the construction machinery from the construction machinery user is classified into communication charge modes and setting for each communication charge mode is selected, changing and setting, by the communication terminal, a current cycle value for each information data packet to a predetermined cycle value for each packet in accordance with the selected charge mode when one of charge modes is selected, and transmitting the information data packets of the construction machinery to the control server in accordance with the changed transmission cycle value.

Besides, the method may further include previously setting, by the communication terminal, cycle values for information data packets associated with an error or theft for changing when an error or theft event occurs and transmitting the data packets associated with the error and theft to the control server with the previously set cycle value when it is sensed that the error and theft events of the construction machine occur.

### Advantageous Effects

According to Means for Solving the Problem described above, various modes in which cycles of information data packets are set for each charge and a user or a provider selects a desired mode among the modes to set a transmission cycle, thereby setting the transmission cycle in a mode suitable for a communication cost estimated by himself/herself among various modes, not uniformly.

In addition, in the present invention, only a transmission cycle value for necessary information can be changed by providing a method for the user or the provider to directly set a transmission cycle value to thereby arbitrarily set the cycle value according to a content of the necessary information.

Further, when a significant event such as theft occurs, all information included in an information data packet associated with the occurred event is not transmitted but only the necessary information can be included and transmitted to thereby reduce a transmission data amount.

### Brief Description of Drawings

FIG. 1 is an internal configuration diagram of a remote management system according to an exemplary embodiment of the present invention;

FIG. 2 is a flowchart showing a process of managing transmission of communication data of a communication terminal in a control server according to an exemplary embodiment of the present invention;

FIG. 3 is a flowchart showing a process in which a communication terminal transmits an information data packet to a control server in accordance with a cycle value for each packet according to an exemplary embodiment of the present invention; and

FIG. 4 is an exemplary diagram showing an example in which a transmission cycle value is set for each packet according to an exemplary embodiment of the present invention.

### Mode of Invention

Hereinafter, exemplary embodiments of the present invention will be described in detail with reference to the accompanying drawings. It should be noted that the same components refer to the same reference numerals anywhere as possible in the drawings. In the following description, specific detailed matters will be described and are provided to the more overall understanding of the present invention. Further, in describing the present invention, well-known functions or constructions will not be described in detail since they may unnecessarily obscure the understanding of the present invention.

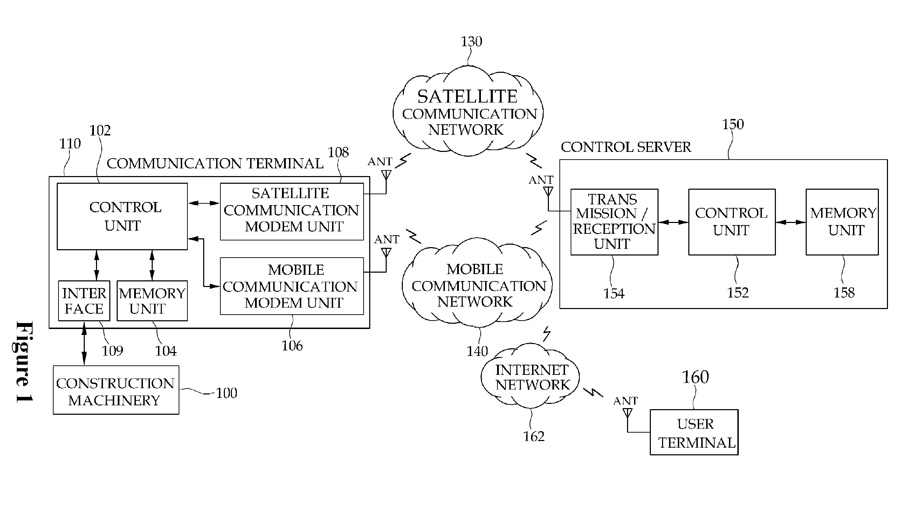

First, an internal configuration of a remote management system of a construction machinery according to an exemplary embodiment of the present invention will be described with reference to FIG. 1.

Referring to FIG. 1, the remote management system of the construction machinery includes a communication terminal 110 connected with the construction machinery and a control server 150 remotely managing information of construction machineries, and includes a user terminal 160 used for a user or a provider to set a transmission cycle of the information of the construction machinery by accessing the control server 150 through the Internet. At this time, the communication terminal 110 communicates with the control server 150 through a mobile communication network 140 or a satellite communication network 130.

First, the user terminal 160 as a terminal for communicating with the control server 150 allows a customer or a provider which is an owner of the construction machinery to access the Web of the control server 150 through an Interne network 162 by using the user terminal 160 and directly set the desired transmission cycle of the information of the construction machinery. As the user terminal 160, all terminals that can access the Internet network, such as a personal computer (PC), a mobile terminal, a PDA, and the like may be used. As another exemplary embodiment, the user may directly set the information transmission cycle of the construction machinery through an input device (not shown) of the construction machinery 100.

An internal configuration of the control server 150 will be described below. The control server 150 includes a transmission/reception unit 154, a memory unit 158, and a control unit 152.

First, the transmission/reception unit 154 as a unit for transmitting/receiving data through the satellite communication network 130 or the mobile communication network 140 is shown as a unit having both transmission and reception functions in the present invention, but may separately include a transmitter and a receiver.

The memory unit 158 stores the information of the construction machinery 100. The memory unit 158 stores an initially set transmission cycle value for each information data packet. Further, at this time, the information data packet may be classified into a first data packet containing monitoring information, a second data packet containing operation time information, a third data packet containing an error alarm, a fourth data packet containing positional information, a fifth data packet containing filter/oil information, and a sixth data packet containing error history information. The data packets have different cycles depending on a use frequency. Although the information data packets are classified into six in the exemplary embodiment of the present invention, the number of information data packet types may be changed depending on a set-up.

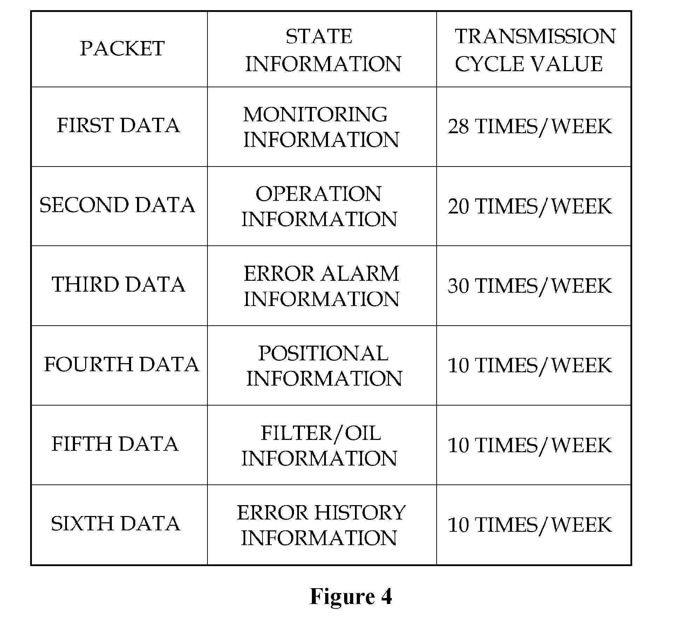

Further, the initially set transmission cycle for each information data packet is similarly stored even in the communication terminal 110. For example, referring to FIG. 4, the first, second, and third data packets may be set 20 times per one week and the fourth, fifth, and sixth data packets may be set 10 times per one week. Hereinafter, in the exemplary embodiment, it will be described on the assumption that the initial set-up is shown as in FIG. 4.

Further, the memory unit 158 includes a plurality of charge modes and stores a cycle value for each of the information data packets in each of the charge modes. The charge mode is a mode previously set by a provider. The cycle value for each data packet previously set for each charge mode may be stored in the memory unit 158 of the control server as described above, but may be stored not in the memory unit 158 but in a memory unit 104 of the communication terminal 110. When cycle information for each data packet previously set for each mode is stored in the memory unit 104 of the communication terminal 110, and a user or the provider selects a predetermined charge mode, the control server 150 transmits only the selected charge mode information to the communication terminal 110 and the communication terminal 110 receiving the corresponding information verifies the cycle information for each data packet according to the corresponding charge mode through the memory unit 104 to change the transmission cycle.

Meanwhile, in the exemplary embodiment of the present invention, a case in which the charge mode is previously set as three modes such as a minimum charge mode, a medium charge mode, and a maximum charge mode will be described as an example. The charge modes may be further subdivided depending on the set-up.

Herein, the minimum charge mode is a mode for setting a cycle for each data packet to a minimum data amount cycle and for example, the provider may previously set the first data packet to five times per one week, the second and third data packets to ten times per one week, the fourth data packet to ten times per one week, and the fifth and sixth data packets to be not sent, in regards to the cycle for each data packet set in the minimum charge mode.

Further, the medium charge mode is a mode for setting the cycle for each data packet to a medium data amount cycle and for example, the provider may previously set each of the first, second, and third data packets to fifteen times per one week and each of the fourth, fifth, and sixth data packets to ten times per one week, in regards to the cycle for each data packet set in the medium charge mode.

Lastly, the maximum charge mode is a mode for setting the cycle for each data packet to a maximum data amount cycle and for example, the provider may previously set each of the first, second, and third data packets to thirty times per one week and each of the fourth, fifth, and sixth data packets to twenty times per one week, in regards to the cycle for each data packet set in the maximum charge mode.

The control unit 152 performs different controlling operations depending on whether a set-up for each packet is selected or a set-up for each charge mode is selected, from the user terminal 160. Hereinafter, the controlling operation with selection will be described.

Controlling operation depending on set-up for each packet

The control unit 152 transmits the data packet including the cycle value for each packet to the communication terminal 110 through the transmission/reception unit 154 by using the mobile communication network 140 or the satellite communication network 130 when the set-up for each packet is selected from the user terminal 160 and the cycle value for each packet is set.

That is, the cycle value for each packet selected by the user or provider is transmitted to the communication terminal 110 of the construction machinery and a program (firmware) of the communication terminal 110 that receives the corresponding cycle value modifies parameter values stored therein. That is, there are values of parameters A, B, C, D, E, and F respectively corresponding to the cycle values of the first, second, third, fourth, fifth, and sixth state information and the values are modified. Further, since the program of the communication terminal operates by referring to the values of parameters A, B, C, D, E, and F, the transmission cycle of the terminal may be changed.

Controlling operation depending on set-up for each charge

When the user terminal 160 selects a predetermined charge mode, the control unit 152 performs an operation for changing the transmission cycle of the communication terminal 110 so as to change each cycle for each information data packet to the cycle for each packet depending on the selected charge mode.

As such, the method of changing the transmission cycle of the communication terminal 110 depending on selection of the charge mode in the control unit 152 includes a method of changing the transmission cycle by directly transmitting the cycle value for each data packet corresponding to the selected charge mode to the communication terminal 110 and a method of transmitting information on the selected charge mode and verifying and changing each cycle value for each data packet for the charge mode in the communication terminal 110.

The first method is a method that can be used when the cycle value for each data packet depending on the charge mode is stored in the memory unit 158 of the control server 150.

The control unit 152 verifies the cycle value for each data packet corresponding to the selected charge mode through the memory unit 158, and transmits the verified cycle value for each data packet to the communication terminal 110 of the construction machinery by using the mobile communication network 140 or the satellite communication network 130 to change the transmission cycle of the terminal.

Next, the second method is a method that can be used when the cycle value for each data packet depending on the charge mode is stored in the memory unit 104 of the communication terminal 110.

The control unit 152 transmits only the mode information of the information on the selected charge mode to the communication terminal 110 by using the mobile communication network 140 or the satellite communication network 130, such that in the communication terminal 110, a terminal program modifies the internal parameters by using the cycle value for each packet stored in the memory unit 104.

In the above description, the configuration to allow the user to select the cycle value for each packet or charge mode through the user terminal 160 is described, but the user may directly select the cycle value for each packet or the charge mode in the construction machinery 100 through an input device of the communication terminal 110 or an instrument panel input device of the construction machinery 100. At the time of selecting the cycle value for each packet or the charge mode in the construction machinery 100, the communication terminal 110 changes and sets current information data to the selected cycle value for each packet or charge mode without transmitting cycle setting information from the control server 150 to the communication terminal 110 as setting the cycle through the user terminal 110.

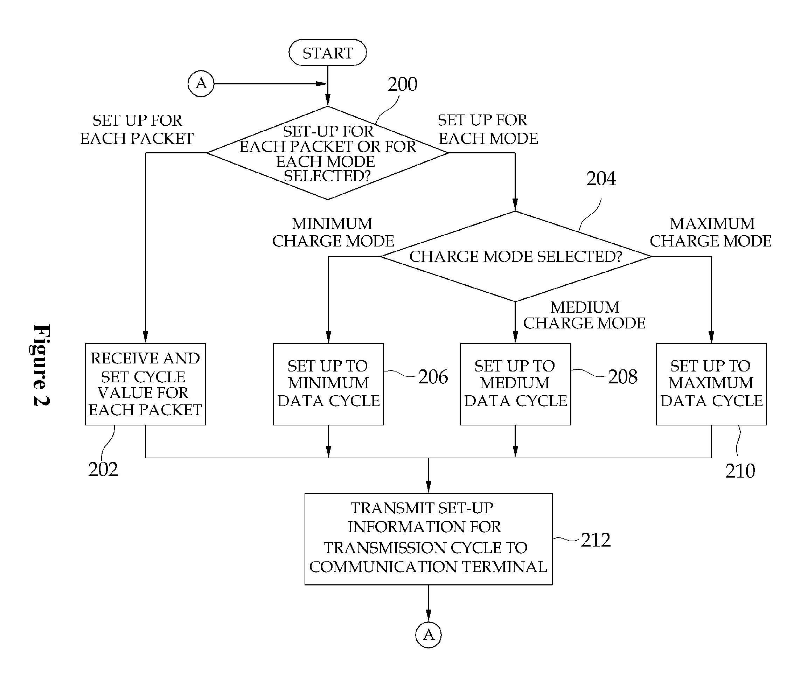

A process of managing transmission of communication data of the communication terminal 110 in the control server 150 configured as above will be described with reference to FIG. 2.

Referring to FIG. 2, in step S200, the control server 150 allows the user terminal 160 to access the control server 150 through the Internet network 162 to examine whether selection for setting for each packet or for each mode.

If there is selection for setting for each packet, the process proceeds to step S202 and if there is selection for setting for each mode, the process proceeds to step S204.

In step S202, the cycle value for each packet is inputted into the control server 150 from the user terminal 160 and the cycle value for each packet is set as the inputted cycle value for each packet and the process proceeds to step S212, such that the control server 150 transmits the set-up information for the transmission cycle to the communication terminal 110.

Meanwhile, there is selection for setting for each mode, such that in the step S204, the control server 150 examines which mode among the minimum charge mode, the medium charge mode, and the maximum charge mode is selected. That is when the user makes the selection for setting for each mode through the user terminal 160, information on the selectable modes will be displayed through a screen and the user selects one of the charge modes. In this case, the user terminal 160 transfers the selected charge mode to the control server 150 to verify which mode is selected.

If the minimum charge mode is selected, the process proceeds to step S206, a predetermined cycle value for each information data packet corresponding to the minimum charge mode is verified, and the current cycle value for each packet is changed and set to the verified cycle value for each packet. Thereafter, the process proceeds to step S212 and the set cycle information for each packet is transmitted to the communication terminal 110.

If the medium charge mode is selected, the process proceeds to step S208, a predetermined cycle value for each information data packet corresponding to the medium charge mode is verified, and the current cycle value for each packet is changed and set to the verified cycle value for each packet. Thereafter, the process proceeds to step 5212 and the set cycle value for each packet is transmitted to the communication terminal 110.

If the maximum charge mode is selected, the process proceeds to step S210, a predetermined cycle value for each information data packet corresponding to the maximum charge mode is verified, and the current cycle value for each packet is changed and set to the verified cycle value for each packet. Thereafter, the process proceeds to step 5212 and the set cycle value for each packet is transmitted to the communication terminal 110.

Hereinafter, referring back to FIG. 1, an internal configuration of the communication terminal 110 will be described.

In the case of the internal configuration of the communication terminal 110, the communication terminal 110 includes the control unit 102, the memory unit 104, a mobile communication modem unit 106, a satellite communication modem unit 108, and an interface 109 for interfacing data transmission and reception with the construction machinery 100.

The mobile communication modem unit 106 is a modem for transmitting and receiving data through the mobile communication network 140 and the satellite communication modem unit 108 is a modem for transmitting and receiving data through the satellite communication network 130. An example in which the communication terminal 110 according to the exemplary embodiment of the present invention includes both the satellite communication modem 108 and the mobile communication modem 106 to use both the satellite communication and the mobile communication is described, but the communication terminal 110 may be configured to include one of both modems to communicate through only the corresponding modem.

The memory unit 104 stores the cycle value for each information data packet. Further, as described in the description of the memory unit 158 of the control server 150, the cycle value for each information data packet may be previously stored in the memory unit 104 for each charge mode according to the set-up.

The control unit 102 changes and sets the current transmission value for each information data packet according to the cycle value for each packet received from the control server 150 to the received cycle value for each packet, and transmits the information data packets of the construction machinery to the control server 150 according to the changed and set transmission cycle.

Further, when receiving predetermined charge mode information from the control server 150, the control unit 102 verifies the previously stored cycle value for each information data packet according to the corresponding charge mode, changes and sets the current cycle value for each packet to the verified cycle value for each packet as the transmission cycle, and transmits the data packets including the information of the construction machinery to the control server 150 according to each changed transmission cycle value for each data packet.

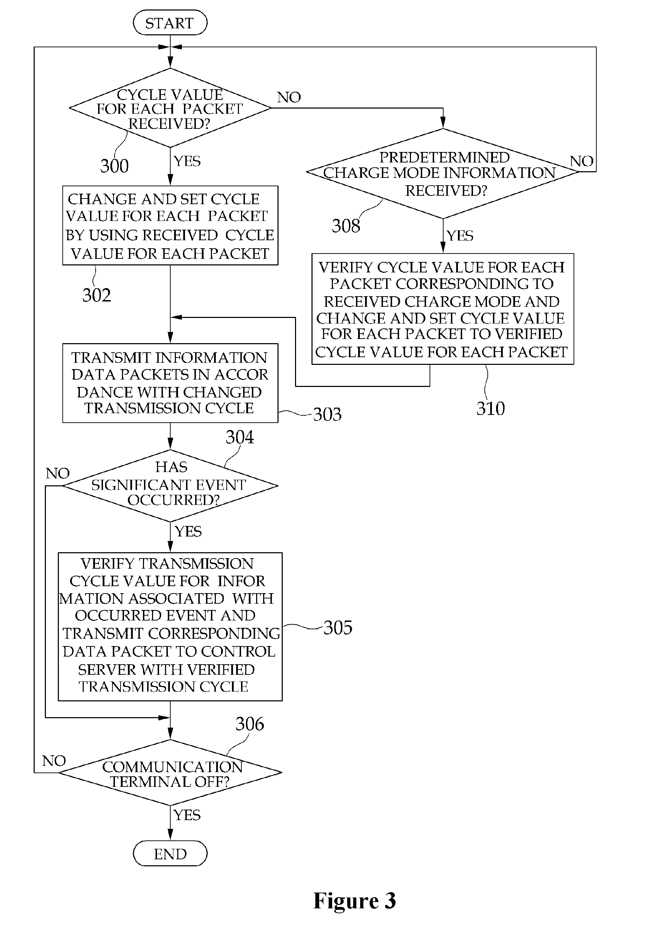

A process of transmitting a state information data packet to the control server 150 according to the cycle value for each packet in the communication terminal 110 configured as above will be described with reference to FIG. 3.

Referring to FIG. 3, when the communication terminal 110 receives the data packet including the cycle value for each packet transmitted to change the transmission cycle from the control server 150 in step S300, the process proceeds to step S302, and changes and sets the cycle value for each packet by using the received cycle value for each packet and if not, the process proceeds to step S308.

In step S308, the communication terminal 110 examines whether the information on the predetermined charge mode for changing the transmission cycle is received.

If the predetermined charge mode information is received from the control server 150, the process proceeds to step S310 in which the cycle value for each packet corresponding to the received charge mode is verified, and the verified cycle value for each packet is changed and set, and thereafter, the process proceeds to step S303**.**

In step S303 performed in steps S302 and S310, the communication terminal 110 transmits the information data packets according to the changed transmission cycle.

Thereafter, the process proceeds to step S304 to examine whether a significant event occurs in the construction machinery 100. At this time, the significant event represents an event such as an error or theft to frequently transmit the corresponding state information regardless of the set cycle for each packet or charge mode.

If it is sensed that the significant event occurs in the construction machinery according to the examination result in step S304, the process proceeds to step S305 and the communication terminal 110 verifies a transmission cycle value for information on the corresponding event. Thereafter, the communication terminal 110 transmits a data packet associated with the significant event to the control server 150 with the verified transmission cycle value.

For example, in the case in which the error occurs as the significant event, the third data packet containing the error alarm changes the transmission cycle to transmit the third data packet with a predetermined transmission cycle associated with the error occurrence event without depending on the predetermined set-up for each packet or set-up for each mode. For example, the third data is transmitted at ten times per one week in the minimum charge mode, but differently from that, the transmission cycle is changed to be a cycle in which the third data is transmitted at seven times per one day.

Further, in the case in which the machinery is thieved as the significant event, although the minimum charge mode is set and thus the fourth data packet containing the positional information is set to be transmitted at ten times per one week, when the theft event occurs, the control server 150 can verify event associated information more specifically by changing the cycle so as to transmit the fourth data packet more frequently regardless of the set charge mode by changing the cycle so as to transmit the fourth data packet at ten times per one day.

As described above, when the significant event occurs, the communication terminal 110 may change a cycle for only the data packet associated with the corresponding event and in addition, reduce a data amount of a packet associated with the corresponding event. For example, the fourth data packet containing the positional information may include various pieces of information such as longitude, latitude, time, a direction, velocity, and the like, but in the case of theft, the direction and velocity information are unnecessary, and as a result, only the longitude, latitude, and time information are included in the fourth data packet to be transmitted except for the unnecessary information. That is, only necessary information is included in the data packet, such that the data amount may be reduced and transmitted.

Thereafter, when the communication terminal is off in step S306, the process ends and if not, the process proceeds to step S300.

In the exemplary embodiment of FIG. 3, the case in which cycle value set-up for the significant event such as the error or theft event is stored in the communication terminal 110 and when the significant event occurs, the data packets associated with the error and the theft are transmitted to the control server 150 with a predetermined cycle value in the communication terminal 110 has been described as an example.

However, the control server 150 examines whether the significant event occurs in the construction machinery 100 and when it is sensed that the significant event occurs, the control server 150 verifies the transmission cycle value for the information associated with the corresponding event, such that the communication terminal 110 may transmit the data packet containing the verified transmission cycle value to transmit the data packets associated with the error and the theft with the received cycle value to the control server 150.

Further, the cycle value is restored and set to the cycle value for each data packet before the change again when the significant event is cancelled.

As described above, although certain exemplary embodiments of the present invention has bee described in detail, it is to be understood by those skilled in the art that the spirit and scope of the present invention are not limited to the certain exemplary embodiments, but are intended to cover various modifications and changes without departing from the gist.

Accordingly, since the above-mentioned exemplary embodiments are provided to inform those skilled in the art of the scope of the present invention, it should be understood that they are exemplary in all aspects and not limited and the present invention is just defined by the scope of the appended claims.

### Industrial Applicability

The present invention can be applied to a system for managing information of a construction machinery.

## Claims

1. A method for setting a remote transmission cycle of information of a construction machinery using a control server in the construction machinery including a communication terminal, the method comprising:
receiving, by the communication terminal, each set cycle value for each packet from the control server, and changing and setting a current cycle value for each information data packet to the cycle value for each packet transmitted from the control server when a request for setting the information transmission cycle of the construction machinery is received from the control server to the communication terminal; and
transmitting the information data packets of the construction machinery to the control server in accordance with the changed transmission cycle value.

2. The method for setting a remote transmission cycle of information of a construction machinery according to claim 1, further comprising:
transmitting, by the user terminal, the selected packet information to the control server when a user of the construction machinery selects each packet for setting the transmission cycle of the information of the construction machinery through a user terminal.

3. The method for setting a remote transmission cycle of information of a construction machinery according to claim 2, further comprising:
providing, by the control server, selectable charge modes when selection for each packet for setting the transmission cycle of the information of the construction machinery from the construction machinery user is classified into communication charge modes transmitted from the communication terminal to the control server and there is selection for setting each communication charge mode, and transmitting a predetermined cycle value for each packet corresponding to the selected charge mode when one charge mode of charge modes; and
changing and setting, by the communication terminal, the current cycle value for each information data packet to the cycle value for each packet transmitted from the control server and transmitting the information data packets of the construction machinery to the control server in accordance with the changed transmission cycle value.

4. The method for setting a remote transmission cycle of information of a construction machinery according to claim 2, further comprising:
providing, by the control server, selectable charge modes when selection for each packet for setting the transmission cycle of the information of the construction machinery from the construction machinery user is classified into the communication charge modes transmitted from the communication terminal to the control server and there is selection for setting each communication charge mode and transmitting the information on the selected charge mode to the communication terminal when one charge mode of charge modes; and
changing and setting, by the communication terminal, the current cycle value for each information data packet to the predetermined cycle value for each packet in accordance with the charge mode transmitted from the control server and transmitting the information data packets of the construction machinery to the control server in accordance with the changed transmission cycle value.

5. A method for setting a remote transmission cycle of information of a construction machinery using a control server in the construction machinery including a communication terminal, the method comprising:
changing and setting, by the communication terminal, current information data to a predetermined cycle value for each packet when there is selection of a cycle value for each packet for setting the transmission cycle of the information of the construction machinery through the communication terminal from a user of the construction machinery or a predetermined input device attached to the construction machinery; and
transmitting information data packets of the construction machinery to the control server in accordance with the changed transmission cycle value.

6. The method for setting a remote transmission cycle of information of a construction machinery according to claim 5, further comprising:
transmitting, by the communication terminal, the selected packet information to the control server when the user of the construction machinery selects the cycle value for each packet for setting the transmission cycle of the information of the construction machinery.

7. The method for setting a remote transmission cycle of information of a construction machinery according to claim 5, further comprising:
providing, by the communication terminal or the predetermined input device attached to the construction machinery, selectable charge modes when selection for each packet for setting the transmission cycle of the information of the construction machinery from the construction machinery user is classified into communication charge modes and setting for each communication charge mode is selected, changing and setting, by the communication terminal, a current cycle value for each information data packet to a predetermined cycle value for each packet in accordance with the selected charge mode when one of charge modes is selected, and transmitting the information data packets of the construction machinery to the control server in accordance with the changed transmission cycle value.

8. The method for setting a remote transmission cycle of information of a construction machinery according to claim 1 or 5, further comprising:
previously setting, by the communication terminal, cycle values for information data packets associated with an error or theft for changing when an error or theft event occurs and transmitting the data packets associated with the error and theft to the control server with the previously set cycle value when it is sensed that the error and theft events of the construction machine occur.
